# EUROPEAN PATENT APPLICATION

(11) **EP 3 124 235 A1**
(43) Date of publication of application: **01.02.2017**
(21) Application number: 15179324.7
(22) Date of filing: 31.07.2015
(51) Int. Cl.: B32B 27/08, B32B 27/30, B32B 27/32

(54) **MULTILAYER SHEET MATERIAL COMPRISING EVOH**

(71) Applicant: LEIPA Georg Leinfelder GmbH, 86529 Schrobenhausen (DE)
(72) Inventor: HUESMANN, Robin, 10435 Berlin (DE)
(74) Representative: Dilg, Haeusler, Schindelmann Patentanwaltsgesellschaft mbH

(57) **Abstract**

Provided is a multilayer sheet material (102) comprising an EVOH layer (120) and a polyolefin layer (122). The polyolefin layer (122) comprises a mixture of a polyolefin and an adhesion promoter and is located on the surface (134) of the EVOH layer (120) and is in direct contact with a surface (134) of the EVOH layer (120). The polyolefin layer (122) forms an outer surface (136) of the multilayer sheet material (102) and hence the polyolefin layer (120) is an outer layer of the multilayer sheet material (102). Hence, the multilayer sheet material (102) does not comprise a specific barrier layer which is attached to the EVOH layer (120) by an adhesion layer. Further, there is provided a composite material (101) comprising the multilayer sheet material (102) and a carrier material (124). Further, in particular a method and a system for producing the multilayer sheet material (102) is provided.

## Description

### FIELD OF INVENTION

The present invention relates to the field of barrier sheet materials comprising an ethylene vinylalcohol copolymer (EVOH) layer.

### BACKGROUND

EVOH is hygroscopic and maintains its primary property (providing a functional barrier) only if it is protected from humidity. To this end, EVOH is embedded between suitable polymer layers such as polyolefins.

US 2014/0199505 A1 discloses coextrusion of a modified polyolefin tie layer together with and between a polyolefin core layer and an EVOH barrier surface layer. By coextrusion of the layers together, the materials are heat fused together from the molten state and will adhere to each other, as well as the inherent properties of the material permit. The modifying functional groups, such as preferably maleic anhydride groups, help to compatibilize the otherwise less compatible polymers of EVOH and PE.

### SUMMARY

Providing a compatibilizing layer adds complexity to the production of the barrier material.

In view of the above-described situation, there exists a need for an improved technique that enables to provide a barrier sheet material comprising an EVOH layer, while substantially avoiding or at least reducing one or more of the above-identified problems.

This need may be met by the subject matter according to the independent claims. Advantageous embodiments of the herein disclosed subject matter are described by the dependent claims.

According to a first aspect of the herein disclosed subject matter there is provided a multilayer sheet material comprising: an EVOH layer; a polyolefin layer comprising a mixture of a polyolefin and an adhesion promoter; wherein the polyolefin layer is located on a surface of the EVOH layer and is in direct contact with the surface of the EVOH layer; and wherein the polyolefin layer forms (defines) an outer surface of the multilayer sheet material.

According to an embodiment, the polyolefin layer is a first polyolefin layer and the surface of the EVOH layer is a first surface of the EVOH layer, the multilayer sheet material further comprising: a second polyolefin layer comprising a mixture of a polyolefin and an adhesion promoter; wherein the second polyolefin layer is located on a second surface of the EVOH layer and is in direct contact with the second surface of the EVOH layer, wherein the first surface and the second surface are located at opposite sides of the EVOH layer. Providing a polyolefin layer on both opposing sides of the EVOH layer, degradation of the EVOH layer due to moisture can be avoided or at least be reduced.

According to a second aspect of the herein disclosed subject matter, a composite material is provided, the composite material comprising: a multilayer sheet material according to the first aspect or an embodiment thereof; and a carrier layer; wherein the carrier layer is located on the second polyolefin layer at a surface which is opposite the EVOH layer.

According to a third aspect of the herein disclosed subject matter, a method of producing a multilayer sheet material is provided, the method comprising: producing an EVOH layer; producing a polyolefin layer comprising a mixture of a polyolefin and an adhesion promoter; wherein the polyolefin layer is located on a surface of the EVOH layer and is in direct contact with the surface of the EVOH layer; and wherein the polyolefin layer forms an outer surface of the multilayer sheet material.

According to a fourth aspect of the herein disclosed subject matter, there is provided a container comprising a multilayer sheet material according to the first aspect or an embodiment thereof.

According to a fifth aspect of the herein disclosed subject matter a system for producing a multilayer sheet material is provided, the system comprising: an EVOH supply for supplying EVOH; at least one polyolefin supply for supplying a polyolefin layer material, the polyolefin layer material comprising a mixture of a polyolefin and an adhesion promoter; and an extrusion device for receiving the EVOH and the at least one polyolefin layer material and providing, in response hereto, a multilayer sheet material according to the first aspect or an embodiment thereof.

According to a sixth aspect of the herein disclosed subject matter, there is provided a use of a polyolefin layer comprising a mixture of a polyolefin and an adhesion promoter as a moisture barrier for an EVOH layer.

These aspects are based on the idea and the surprising finding of the inventors that the mixture of a polyolefin and an adhesion promoter surprisingly may still provide suitable adherence between the EVOH layer and the polyolefin layer as well as an efficient moisture barrier. Hence, contrary to the established state-of-the-art which uses a separate adhesion layer to attach an outer barrier layer to the EVOH layer, according to the experiments performed by the inventors the separate adhesion layer is not necessary. Rather, according to aspects and embodiments of the herein disclosed subject matter the polyolefin layer which contains the adhesion promoter and which is in direct contact with the EVOH layer is used as a moisture barrier.

In the following, further exemplary embodiments of the herein disclosed subject matter are described, any number and any combination of which may be realized in an implementation of the herein disclosed subject matter.

According to an embodiment, the adhesion promoter is a maleic anhydride modified polyethylene, e.g. a maleic anhydride modified linear low density polyethylene (LLDPE), such as a maleic anhydride modified mLLDPE available under the trademark BONDYRAM® from POLYRAM/VELOX (www.velox.com).

According to an embodiment, the fraction of the adhesion promoter in the mixture is in a range between 10 % to 30 %. For instance, in an embodiment the fraction of the adhesion promoter is 20 %. According to an embodiment, the mixture of the polyolefin and the adhesion promoter consists of the polyolefin and the adhesion promoter (i.e. contains no other substances other than polyolefin and adhesion promoter). In such a case a given fraction of the adhesion promoter (e.g. 20 %) also defines the fraction of the polyolefin (e.g. 80 % for 20% adhesion promoter). According to other embodiments, the mixture may further contain additives.

According to an embodiment, the multilayer sheet material is a polymer multilayer consisting exclusively of polymer layers (e.g. of the polyolefin layers and the EVOH layer).

According to an embodiment, the polyolefin layer is a heat-sealable layer. The heat sealable layer allows for heat sealing as is known in the art and allows allows in particular heat sealing of the polyolefin layer to other layers, material sheets or objects.

According to an embodiment, the EVOH layer is provided with an area weight in a range between 1 to 50 grams per square meter (g/m²), e.g. in a range between 2 to 25 g/m². According to an embodiment, each polyolefin layer is provided with an area weight in a range between 3 to 100 g/m², e.g. in a range between 8 to 30 g/m². According to an embodiment the first polyolefin layer has a first area weight which is different from a second area weight of the second polyolefin layer. According to a further embodiment, the area weight of the first polyolefin layer and the area weight of the second polyolefin layer are equal. It is noted that in virtue of the density of its layer material the area weight of a layer corresponds to a thickness of the layer. However, in accordance with common practice in the field, area weights instead of thicknesses of the respective layers are provided.

According to an embodiment, the extrusion device comprises a feed block for co-extruding the EVOH layer and the at least one polyolefin layer as the multilayer sheet material.

According to a further embodiment, the multilayer sheet material consists of three coextrusion layers, namely of the first polyolefin layer, the second polyolefin layer and the EVOH layer between the first polyolefin layer and the second polyolefin layer. Having only three coextrusion layers provides the advantage that the production of the sheet material is easier and more cost efficient compared to coextrusion processes involving more than three layers. In particular, the fewer coextrusion layers the multilayer sheet material contains, the less complex and costly is its production (manufacturing). For instance, a three layer feed block is less complex and thus less costly than a feed block for providing more than three coextrusion layers.

According to a further embodiment, the first polyolefin layer is of a composition which is different from the composition of the second polyolefin layer. For example, if coextrusion is used for production of the multilayer sheet material, a three layer coextrusion feed block ("ABC" or even "ABA") may be sufficient for the production of the multilayer sheet material.

According to a further embodiment, the EVOH layer and the polyolefin layer are produced by coextrusion.

The multilayer sheet material according to aspects and embodiments of the herein disclosed subject matter may be used to manufacture a container and in particular to manufacture or provide at least a portion of the container, e.g. one container wall. The container wall made of the multilayer sheet material or comprising the multilayer sheet material may be for example a lid or part of a bag, such as a film bag. The container wall comprising the multilayer sheet material may be or may comprise a composite material according to aspects and embodiments of the herein disclosed subject matter.

According to an embodiment, the system further comprises a carrier material supply for supplying a carrier material; wherein the extrusion device is positioned to provide the multilayer sheet material onto the carrier material. According to an embodiment, the carrier material is provided in the form of a sheet, e.g. in the form of a carrier layer. According to an embodiment, the carrier material is paper. However, other carrier materials, e.g. metals, polymers, fabrics, etc. are also contemplated.

According to further embodiments of the first aspect, the multilayer sheet material is adapted for providing the functionality of one or more of the aforementioned embodiments and/or for providing the functionality as required by one or more of the aforementioned embodiments, in particular of the embodiments of the second, third, fourth, fifth and sixth aspect disclosed herein.

According to further embodiments of the second aspect, the composite material is adapted for providing the functionality of one or more of the aforementioned embodiments and/or for providing the functionality as required by one or more of the aforementioned embodiments, in particular of the embodiments of the first, third, fourth, fifth and sixth aspect disclosed herein.

According to further embodiments of the third aspect, the method is adapted for providing the functionality of one or more of the aforementioned embodiments and/or for providing the functionality as required by one or more of the aforementioned embodiments, in particular of the embodiments of the first, second, fourth, fifth and sixth aspect disclosed herein.

According to further embodiments of the fourth aspect, the container is adapted for providing the functionality of one or more of the aforementioned embodiments and/or for providing the functionality as required by one or more of the aforementioned embodiments, in particular of the embodiments of the first, second, third, fifth and sixth aspect disclosed herein.

According to further embodiments of the fifth aspect, the system is adapted for providing the functionality of one or more of the aforementioned embodiments and/or for providing the functionality as required by one or more of the aforementioned embodiments, in particular of the embodiments of the first, second, third, fourth and sixth aspect disclosed herein.

According to further embodiments of the sixth aspect, the use is adapted for providing the functionality of one or more of the aforementioned embodiments and/or for providing the functionality as required by one or more of the aforementioned embodiments, in particular of the embodiments of the first, second, third, fourth and fifth aspect disclosed herein.

In the above there have been described and in the following there will be described exemplary embodiments of the subject matter disclosed herein with reference to a multilayer sheet material, a respective method of producing the same, a composite material comprising the same, a container comprising the same, a system for producing the same and a use of a polyolefin layer comprising a mixture of a polyolefin and an adhesion promoter. It has to be pointed out that of course any combination of features relating to different aspects of the herein disclosed subject matter is also possible. In particular, some features have been or will be described with reference to apparatus type embodiments whereas other features have been or will be described with reference to method type embodiments. However, a person skilled in the art will gather from the above and the following description that, unless otherwise notified, in addition to any combination of features belonging to one aspect also any combination of features relating to different aspects or embodiments, for example even combinations of features of apparatus type embodiments and features of the method type embodiments are considered to be disclosed with this application. In this regard, it should be understood that any method feature derivable from a corresponding explicitly disclosed device feature should be based on (and is considered to disclose) the respective function of the device feature and should not be considered as being limited to device specific elements disclosed in conjunction with the device feature. Further, any device feature derivable from a corresponding explicitly disclosed method feature should be based on (and is considered to disclose) the respective function and a suitable device feature for performing the function.

The aspects and embodiments defined above and further aspects and embodiments of the herein disclosed subject matter are apparent from the examples to be described hereinafter and are explained with reference to the drawings, but to which the invention is not limited.

### BRIEF DESCRIPTION OF THE DRAWINGS

Fig. 1 shows a system for producing a multilayer sheet material according to embodiments of the herein disclosed subject matter.
Fig. 2 shows a composite material according to embodiments of the herein disclosed subject matter.
Fig. 3 shows part of a container according to embodiments of the herein disclosed subject matter.

### DETAILED DESCRIPTION

The illustration in the drawings is schematic. It is noted that in different figures, similar or identical elements are provided with the same reference signs or with reference signs which are different from the corresponding reference signs only within the first digit. Accordingly, the description of similar or identical features is not repeated in the description of subsequent figures in order to avoid unnecessary repetitions. However, it should be understood that the description of these features in the preceding figures is also valid for the subsequent figures unless explicitly noted otherwise.

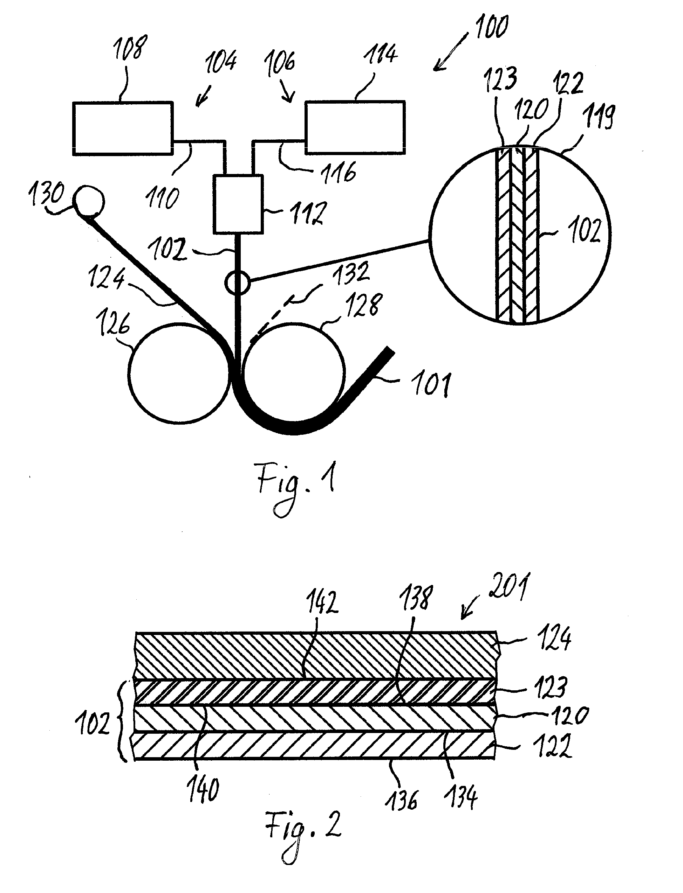

Fig. 1 shows a system 100 for producing a composite material 101 comprising a multilayer sheet material 102 according to embodiments of the herein disclosed subject matter.

In accordance with an embodiment, the system 100 comprises an EVOH supply 104 and at least one polyolefin supply 106. In accordance with an embodiment, the EVOH supply 104 comprises an EVOH reservoir 108 and a supply line 110 for coupling the EVOH reservoir 108 to a feed block 112 of the system 100. In accordance with a further embodiment, the polyolefin supply 106 comprises a polyolefin layer material reservoir 114 and a supply line 116 for coupling the polyolefin reservoir 114 to the feed block 112.

In accordance with an embodiment the feed block 112 is configured for receiving the EVOH and the at least one polyolefin layer material from the respective supplies 104, 106 and providing, in response hereto, the multilayer sheet material 102. The multilayer sheet material 102 is shown in greater detail in the inset 119 of Fig. 1. In accordance with an embodiment, the multilayer sheet material 102 comprises an EVOH layer 120 and two polyolefin layers 122, 123 on opposing sides of the EVOH layer, as shown in the inset 119 of Fig. 1. The two polyolefin layers 122, 123 are referred to in the following also as a first polyolefin layer 122 and a second polyolefin layer 123. The two polyolefin layers 122, 123 may be of the same composition, as shown in Fig. 1, or, in an alternative embodiment, may be of different composition.

In accordance with an embodiment, the multilayer sheet material 102 comprises or consists of three coextrusion layers, namely the first polyolefin layer 122, the second polyolefin layer 123, and the EVOH layer 120 therebetween. In accordance with an embodiment, the three coextrusion layers 120, 122, 123 form the multilayer sheet material 102, as shown in Fig. 1.

According to an embodiment, the three coextrusion layers 120, 122, 123 are attached to a carrier material 124 which according to a further embodiment is provided as a carrier layer to thereby form the composite material 101. To this end, the system 100 comprises a set of rollers 126, 128 for guiding the carrier layer 124 and pressing the multilayer sheet material 102 onto the carrier layer 124. Under a suitable process conditions (such as the distance of the set of rollers 126, 128 from the feed block 112, the temperature of the multilayer sheet material 102 at the outlet of the feed block 112, etc.) the second polyolefin layer 123, when contacting the carrier layer 124, has a temperature sufficient to attach to the carrier layer 124. According to an embodiment, at least one roller 126, 128 of the set of rollers is adjustable in its temperature. For example, according to an embodiment at least one roller of the set of rollers 126, 128 is coolable (chill roll) to cool the multilayer sheet material (or, in a configuration as shown in Fig. 1, the entire composite material 101).

According to an embodiment, the composite material comprises a single carrier layer 124 which is provided by a carrier material supply 130. In particular in such a configuration, the system 100 may be used for extrusion coating of the carrier layer 124.

According to a further embodiment, the system 100 comprises a further carrier material supply (not shown in Fig. 1) for supplying a further carrier layer 132 (shown by a dashed line in Fig. 1). In particular in such a configuration, the system 100 may be used for laminating the carrier layer 124 and the further carrier layer 132 by means of the multilayer sheet material 102.

Fig. 2 shows a composite material 201 according to embodiments of the herein disclosed subject matter.

The composite material 201 comprises a carrier layer 124 and a multilayer sheet material 102 comprising a first polyolefin layer 122, and an EVOH layer 120, and a second polyolefin layer 123. In accordance with an embodiment, the second polyolefin layer 123 is located between the EVOH layer 120 and the carrier layer 124.

The first polyolefin layer 122 is located on a surface 134 of the EVOH layer 120 and is in direct contact with the surface 134 of the EVOH layer 120. The polyolefin layer 122 forms an outer surface 136 of the multilayer sheet material 102. It is noted that in some embodiments (e.g. in the case the carrier layer 124 shown in Fig. 1 is extrusion coated) the outer surface 136 of the multilayer sheet material 102 is also an outer surface of the composite material 201, as shown in Fig. 2. In other embodiments, e.g. in case the multilayer sheet material 102 is sandwiched between two carrier layers (see layers 124, 132 in Fig. 1) the outer surface 136 of the multilayer sheet material 102 is an inner surface of the resulting composite material (not shown in Fig. 2). In accordance with an embodiment, the second polyolefin layer 123 is located on a second surface 138 of the EVOH layer 120. The second polyolefin layer 123 has a first surface 140 which is in direct contact with the second surface 138 of the EVOH layer 120. Further, the second polyolefin layer 123 has a second surface 142 which is in direct contact with the carrier layer 124. The first surface 140 is opposite the second surface 142 of the second polyolefin layer 123. Further, in accordance with an embodiment the first surface 134 and the second surface 138 of the EVOH layer 120 are at opposite sides of the EVOH layer. Hence, the first polyolefin layer 122 and the second polyolefin layer 123 are sandwiching the EVOH layer 120 therebetween.

According to an embodiment, the multilayer sheet material 102 is defined by all layers of the multilayer sheet material being produced simultaneously by coextrusion. In accordance with an embodiment, the polyolefin layers 122, 123 act as a moisture barrier protecting the EVOH layer 120. In accordance with an embodiment, the polyolefin layers 122, 123 are the only moisture barrier layers of the co-extruded multilayer sheet material 102.

In accordance with an embodiment, the composite material 201 and in particular the multilayer sheet material 102 do not comprise a specific adhesion layer due to the advantageous use of the mixture of a polyolefin and an adhesion promoter in the polyolefin layers 122, 123. According to an embodiment, a polyolefin layer 122, 123 as disclosed herein is a layer of a homogeneous mixture of a polyolefin and an adhesion promoter. It should be understood that in accordance with an embodiment the polyolefin layer 122, 123 may comprise one or more additives such as fillers, etc.

Further in accordance with an embodiment, the second polyolefin layer 123 and the first polyolefin layer 122 are made of different materials. According to an embodiment, the carrier material (material of the carrier layer) is any suitable or desired material, e.g. paper, a polymer film, a non-woven (fleece), an aluminum foil, etc.

According to an embodiment, the polyolefin is a polyethylene (e.g. low-density polyethylene (LDPE), a medium density polyethylene (MDPE), a high density polyethylene (HDPE), a linear low-density part polyethylene (LLDPE)) or a polyethylene copolymer (for example ionomers such as Surlyn®).

While polyolefines and in particular polyethylenes provide a good moisture barrier they are incompatible with EVOH. However, the mixture of the polyolefin and an adhesion promoter surprisingly may still provide suitable adherence between the EVOH layer and the polyolefin layer as well as an efficient moisture barrier.

In accordance with an embodiment, the first polyolefin layer 122 is provided with an area weight of 18 g/m², the EVOH layer 120 is provided with an area weight of 7 g/m² and the second polyolefin layer 123 is provided with an area weight of 13 g/m².

In accordance with a further embodiment, the first polyolefin layer 122 is provided with an area weight of 23 g/m², the EVOH layer 120 is provided with an area weight of 7 g/m² and the second polyolefin layer 123 is provided with an area weight of 13 g/m².

In accordance with a further embodiment, the first polyolefin layer 122 is provided with an area weight of 11 g/m², the EVOH layer 120 is provided with an area weight of 3 g/m² and the second polyolefin layer 123 is provided with an area weight of 10 g/m².

According to an embodiment, the carrier layer 124 is a paper with an area weight of 30 g/m² (or higher in other embodiments).

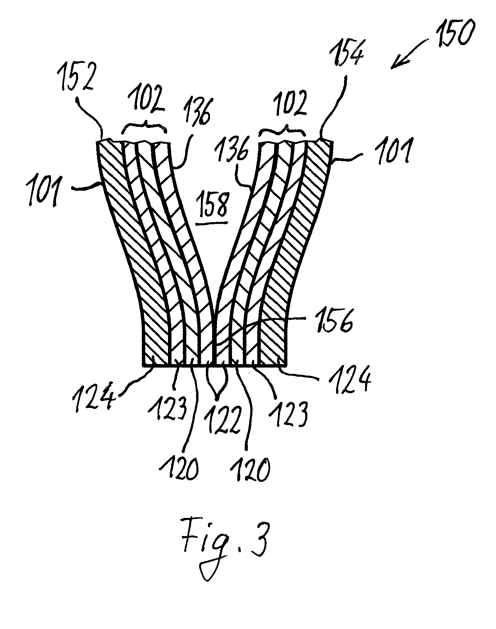

Fig. 3 shows part of a container 150 according to embodiments of the herein disclosed subject matter.

According to an embodiment, the container 150 comprises two portions, a first portion 152 and a second portion 154, of the composite material 101 described with regard to Fig. 1. Each portion 152, 154 of composite material 101 comprises a multilayer sheet material 102 comprising an EVOH layer 120 sandwiched between two polyolefin layers 122, 123. According to an embodiment, the outer surface 136 of the first polyolefin layer 122 of the first portion 152 is facing the outer surface 136 of the first polyolefin layer 122 of the second portion 154. In accordance with an embodiment, the first polyolefin layers 122 are used for heat sealing the two portions 152, 154 of the container 150 to each other in a sealing region 156. In accordance with an embodiment, the first portion 152 and the second portion 154 of composite material 101 are produced as described with regard to Fig. 1 and are brought in position and heat sealed together afterwards. According to an embodiment, the first portion 152 and the second portion 154 define a cavity 158 therebetween. According to an embodiment, the container 150 is a flexible bag. According to other embodiments (not shown in Fig. 3) the composite material 101 may form a different part of the container. For instance, the composite material 101 may form a lid of a container, e.g. of a rigid plastic container.

It should further be noted that a multilayer sheet material as disclosed herein is not limited to dedicated entities as described in some embodiments. Rather, the herein disclosed subject matter may be implemented in various ways while still providing the specified functionality by direct attachment of the polyolefin moisture barrier layer to the EVOH layer, i.e. without a separate adhesion layer between the EVOH layer and the polyolefin moisture barrier layer.

It should be noted that the term "comprising" does not exclude other elements or steps and the "a" or "an" does not exclude a plurality. In particular, the term "comprising" as used herein includes both "comprising inter alia" and "consisting of". Also elements described in association with different embodiments may be combined. It should also be noted that reference signs in the claims should not be construed as limiting the scope of the claims.

Further, it should be noted that while the exemplary system, multilayer sheet material or composite material in the drawings include a particular combination of several embodiments of the herein disclosed subject matter, any other combination of embodiment is also possible and is considered to be disclosed with this application.

In order to recapitulate some of the above described embodiments of the present invention one can state:
Provided is a multilayer sheet material 102 comprising an EVOH layer 120 and a polyolefin layer 122. The polyolefin layer 122 comprises a mixture of a polyolefin and an adhesion promoter and is located on the surface 134 of the EVOH layer 120 and is in direct contact with a surface 134 of the EVOH layer 120. The polyolefin layer 122 forms an outer surface 136 of the multilayer sheet material 102 and hence the polyolefin layer 120 is an outer layer of the multilayer sheet material 102. Hence, the multilayer sheet material 102 does not comprise a specific barrier layer which is attached to the EVOH layer 120 by an adhesion layer. Further, there is provided a composite material 101 comprising the multilayer sheet material 102 and a carrier material 124. Further, in particular a method and a system for producing the multilayer sheet material 102 is provided.

## Claims

1. Multilayer sheet material (102) comprising:
an EVOH layer (120);
a polyolefin layer (122) comprising a mixture of a polyolefin and an adhesion promoter;
wherein the polyolefin layer (122) is located on a surface (134) of the EVOH layer (120) and is in direct contact with the surface (134) of the EVOH layer (120); and
wherein the polyolefin layer (122) forms an outer surface (136) of the multilayer sheet material (102).

2. Multilayer sheet material (102) according to claim 1, wherein the polyolefin layer is a first polyolefin layer (122) and the surface of the EVOH layer (120) is a first surface (134) of the EVOH layer (120), the multilayer sheet material (102) further comprising:
a second polyolefin layer (123) comprising a mixture of a polyolefin and an adhesion promoter;
wherein the second polyolefin layer (123) is located on a second surface (138) of the EVOH layer (120) and is in direct contact with the second surface (138) of the EVOH layer (120), wherein the first surface (134) and the second surface (138) are located at opposite sides of the EVOH layer (120).

3. Multilayer sheet material (102) according to claim 2, wherein
the multilayer sheet material (102) consists of three coextrusion layers, namely of the first polyolefin layer (122), the second polyolefin layer (123) and the EVOH layer (120) between the first polyolefin layer (122) and the second polyolefin layer (123).

4. Multilayer sheet material (102) according to claim 2 or 3, wherein the first polyolefin layer (122) is of a composition which is different from the composition of the second polyolefin layer (123).

5. Multilayer sheet material (102) according to any one of claims 2 to 4, wherein the first polyolefin layer (122) has a first area weight which is different from a second area weight of the second polyolefin layer (123).

6. Composite material comprising:
a multilayer sheet material (102) according to any one of claims 2 to 5; and
a carrier material (124);
wherein the carrier material (124) is located on the second polyolefin layer (123) at a surface (142) which is opposite the EVOH layer (120).

7. Method of producing a multilayer sheet material (102), the method comprising:
producing an EVOH layer (120);
producing a polyolefin layer (122) comprising a mixture of a polyolefin and an adhesion promoter;
wherein the polyolefin layer (122) is located on a surface (134) of the EVOH layer (120) and is in direct contact with the surface (134) of the EVOH layer (120); and
wherein the polyolefin layer (122) forms an outer surface (136) of the multilayer sheet material (102).

8. Method according to claim 7, wherein the EVOH layer (120) and the polyolefin layer (122) are produced by coextrusion.

9. Container (150) having a container portion (152, 154) which comprises a multilayer sheet material (102) according to any one of claims 1 to 5.

10. System (100) for producing a multilayer sheet material (102), the system comprising:
an EVOH supply (104) for supplying EVOH;
at least one polyolefin supply (106) for supplying a polyolefin layer material, the polyolefin layer material comprising a mixture of a polyolefin and an adhesion promoter;
an extrusion device for receiving the EVOH and the at least one polyolefin layer material and providing, in response hereto, a multilayer sheet material (102) according to any one of claims 1 to 4.

11. System (100) according to claim 10, wherein the extrusion device comprises a feed block (112) for co-extruding the EVOH layer (120) and the at least one polyolefin layer (122, 123) as the multilayer sheet material (102).

12. System (100) according to claim 10 or 11, the system further comprising a carrier material supply (130) for supplying a carrier material (124); wherein the extrusion device is positioned to provide the multilayer sheet material (102) onto the carrier material (124).

13. Use of a polyolefin layer comprising a mixture of a polyolefin and an adhesion promoter as a moisture barrier for an EVOH layer (120).
